# EUROPÄISCHE PATENTANMELDUNG

(11) **EP 1 028 023 A2**
(43) Veröffentlichungstag der Anmeldung: **16.08.2000**
(21) Anmeldenummer: 00100694.9
(22) Anmeldetag: 14.01.2000
(51) Int. Cl.: B60N 5/00

(54) **Vorrichtung zum Verstauen von mitgeführten Gegenständen**

(30) Priorität: 09.02.1999 DE 19905096
(71) Anmelder: Volkswagen Aktiengesellschaft, 38436 Wolfsburg (DE)
(72) Erfinder: Stephan, Jörg, 38550 Isenbüttel (DE); Hofmann, Gustav, 38114 Braunschweig (DE); Bachorski, Tomasz, 59077 Hamm (DE)

(57) **Zusammenfassung**

Die vorliegende Erfindung betrifft eine Vorrichtung (2) zum Verstauen von mitgeführten Gegenständen im Innenraum eines Personenkraftwagens oder eines anderen Transportmittels, umfassend ein langgestrecktes Klemmelement (8), dessen entgegengesetzte Enden im Abstand voneinander an einer Halterung (6) befestigt sind und dessen Mitte entgegen einer Rückstellkraft von der Halterung (6) weg beweglich ist, um einen Gegenstand zwischen das Klemmelement (8) und die Halterung (6) einzuführen und ihn dann durch Loslassen des Klemmelements (8) zwischen diesem und der Halterung (6) festzuklemmen. Um eine schnelle Anbringung der Vorrichtung bei der Endmontage sicherzustellen, und zu gewährleisten, daß sie sich gut in das ästhetische Erscheinungsbild des Innenraums einfügt, bilden erfindungsgemäß die Halterung (6) und das Klemmelement (8) ein vormontiertes Einbauteil (4), das in eine an die äußere Kontur der Halterung (6) angepaßte und zum Innenraum hin offene Aufnahmevertiefung eines Teils des Transportmittels oder seiner Innenraumausstattung einsetzbar ist.

## Beschreibung

Die vorliegende Erfindung betrifft eine Vorrichtung zum Verstauen von mitgeführten Gegenständen im Innenraum eines Personenkraftwagens oder eines anderen Transportmittels, umfassend ein langgestrecktes Klemmelement, dessen entgegengesetzte Enden im Abstand voneinander an einer Halterung befestigt sind und dessen Mitte entgegen einer Rückstellkraft von der Halterung weg beweglich ist, um einen Gegenstand zwischen das Klemmelement und die Halterung einzuführen und ihn dann durch Loslassen des Klemmelements zwischen diesem und der Halterung festzuklemmen.

Eine Vorrichtung der eingangs genannten Art ist in einer noch unveröffentlichten deutschen Patentanmeldung des Anmelders beschrieben, die ein Klemmelement in Form eines elastisch dehnbaren Spannbandes zeigt, dessen entgegengesetzte Enden im Abstand voneinander an einer von einer Mittelkonsole, einem Sitzteil oder einer Rückenlehne eines Personenkraftwagens gebildeten Halterung befestigt sind, so daß ein mitgeführter Gegenstand, wie beispielsweise eine Getränkeflasche, ein Regenschirm, eine kleinere Handtasche oder eine Zeitschrift, zwischen dem Spannband und der Halterung festgeklemmt werden können, um diesen Gegenstand während der Fahrt sicher zu verstauen. Zur Befestigung der Enden des Spannbandes umfaßt die Vorrichtung zwei Befestigungselemente, die einzeln an der Halterung angebracht werden müssen, bevor das Spannband eingehängt werden kann.

Am oberen Ende von Aufnahmetaschen aus Gewebe oder Netzmaterial für Zeitschriften oder dergleichen, wie sie sich beispielsweise an der Rückseite von Flugzeug- oder Reisebussitzen finden, ist ebenfalls häufig eine Vorrichtung der eingangs genannten Art vorgesehen, bei der das Klemmelement von einem elastisch dehnbaren Rand der Tasche gebildet wird und außer zum Festklemmen von längeren, aus der Tasche heraus nach oben überstehenden Gegenständen auch zum Verschließen der Tasche dient. Jedoch findet sich für derartige Taschen im Innenraum von Personenkraftfahrzeugen nur an wenigen Stellen ausreichend Platz, und diese müssen zudem in die benachbarte Oberflächenverkleidung integriert werden, wenn ein ansprechendes Erscheinungsbild gewährleistet werden soll. Dadurch wird ebenfalls der Montageaufwand vergrößert.

Ausgehend hiervon liegt der Erfindung die Aufgabe zugrunde, eine Vorrichtung der eingangs genannten Art dahingehend zu verbessern, daß sie sich bei der Endmontage schnell anbringen läßt und sich gut in das ästhetische Erscheinungsbild des Innenraums einfügt.

Diese Aufgabe wird erfindungsgemäß dadurch gelöst, daß die Halterung und das Klemmelement ein vormontiertes Einbauteil bilden, das in eine an die äußere Kontur der Halterung angepaßte und zum Innenraum hin offene Aufnahmevertiefung eines Teils des Transportmittels oder seiner Innenraumausstattung einsetzbar ist.

Durch die erfindungsgemäße Ausbildung der Vorrichtung als modulares Einbauteil kann zum einen die Montage der Vorrichtung erheblich beschleunigt werden, da das fertige Einbauteil nur noch in die vorgesehene Aufnahmevertiefung eingeführt und zum Beispiel durch Einclipsen oder Einrasten in dieser befestigt werden muß. Zum anderen können durch das Einsetzen der Halterung in die vorgesehene Aufnahmevertiefung die Befestigungseinrichtungen für die Enden des Klemmelements für einen Betrachter unsichtbar in dem zur Aufnahme der Vorrichtung vorgesehenen Teil des Transportmittels oder seiner Innenraumausstattung untergebracht werden, beispielsweise innerhalb einer Türinnenverkleidung oder einer Mittelkonsole bzw. in einem Sitzunterteil oder einer Armlehne eines Sitzes oder einer Sitzbank.

Eine bevorzugte Ausgestaltung der Erfindung sieht vor, daß die Halterung als einstückiges Formteil aus Kunststoff ausgebildet ist, das in seiner Mitte eine vom Klemmelement überbrückte und mindestens nach einer Seite zu über einen Längsseitenrand des Klemmelements hinaus erweiterte Griffmulde begrenzt. Vorzugsweise weist das Formteil zwei in Längsrichtung des Klemmelements über die Griffmulde überstehende Fortsätze auf, an denen jeweils eines der Enden des Klemmelements befestigt ist.

Um insbesondere bei horizontaler Ausrichtung des Klemmelements zu verhindern, daß ein in der Vorrichtung verstauter Gegenstand infolge seiner Gewichtskraft nach unten rutscht, ist vorzugsweise ein die Griffmulde umgebender Rand mindestens teilweise mit einer rutschfesten Oberfläche und/oder elastisch nachgiebigen Noppen versehen, während das Klemmelement auf seiner der Griffmulde zugewandten Rückseite eine rutschfeste Beschichtung aufweist. Vorzugsweise bestehen die rutschfeste Oberfläche, die Noppen und/oder die Beschichtung aus einem gummielastischen oder elastomeren Material, das am Rand der Griffmulde in das Kunststoff-Formteil eingesetzt an dieser Stelle bzw. an der Rückseite des Klemmelements angeformt ist.

Um das Erscheinungsbild des Innenraums bei unbelastetem Klemmelement durch eine möglichst geschlossen wirkende Oberfläche zu verbessern, sieht eine weitere vorteilhafte Ausgestaltung der Erfindung vor, daß eine von der Griffmulde abgewandte Vorderseite des unbelasteten Klemmelements im wesentlichen mit einer die Aufnahmevertiefung umgebenden Oberfläche fluchtet. Dies wird zweckmäßig dadurch erreicht, daß jeder der beiden Fortsätze des Einbauteils eine nach vorne zu offene Ausnehmung zur Aufnahme eines über die Griffmulde überstehenden Abschnitts des Klemmelements und einer Befestigungseinrichtung für dessen eines Ende aufweist. Somit kann die Vorrichtung derart gestaltet werden, daß bei unbelastetem Klemmelement abgesehen von einem umlaufenden Rand des Formteils keine ihrer Komponenten über die umgebende Oberfläche übersteht.

Die Befestigungseinrichtung für jedes Ende des Klemmelements besteht vorzugsweise aus einem Haltebolzen, der das Ende um eine quer zur Längsrichtung des Klemmelements ausgerichtete Schwenkachse verschwenkbar in der Ausnehmung festhält. Der Haltebolzen kann am Ende des Klemmelements angeformt sein oder eine Öffnung am Ende des Klemmelements durchsetzen, wobei in beiden Fällen seine entgegengesetzte Stirnenden vorzugsweise in Aussparungen einer Begrenzungswand der Ausnehmung gehalten werden.

Eine weitere bevorzugte Ausgestaltung der Erfindung und ggf. selbständig patentbegründende Erfindungsalternative sieht vor, daß das Klemmelement einen oder mehrere starre Abschnitte umfaßt, das heißt Abschnitte, die sich nicht biegen, wenn das Klemmelement in der Mitte nach vorne gezogen wird, um einen Gegenstand zwischen seiner Rückseite und der Vorderseite der Halterung festzuklemmen. Im Vergleich zu einem auf seiner gesamten Länge biegsamen Klemmelement aus einem elastischen Gewebematerial, wie im Stand der Technik bekannt, ermöglichen es diese starren Abschnitte, die Beschaffenheit der sichtbaren Vorderseite des Klemmelements erheblich stärker zu variieren, um sie in gewünschter Weise an die Beschaffenheit der umgebenen Oberflächen anzupassen oder von dieser abzuheben bzw. ihr ein edles Aussehen zu verleihen.

Um trotz der starren Abschnitte eine gewisse Anpassung des Klemmelements an die Kontur eines festzuklemmenden Gegenstandes zu ermöglichen, erstrecken sich die starren Abschnitte vorzugsweise von den beiden Enden des Klemmelements aus in Richtung von dessen Mitte, wobei sie im Bereich der Enden des Klemmelements schwenkbar gelagert sind.

Da zum Verstauen eines Gegenstandes neben einer gewissen Anpassung des Klemmelements an die Kontur des Gegenstandes auch eine Dehnung des Klemmelements in Längsrichtung erforderlich ist, um seine Mitte von der Halterung wegzubewegen, umfaßt das Klemmelement gemäß einer weiteren bevorzugten Ausgestaltung der Erfindung ein flexibles Band und mindestens ein starres Verblendungselement, das einen Teil von dessen Vorderseite bedeckt.

Das Band selbst kann entweder aus einem elastisch dehnbaren Gewebe- und/oder Gummimaterial bestehen oder alternativ aus einem unelastischen Gewebematerial, wobei in diesem Fall seine entgegengesetzte Enden jeweils auf einem entgegen der Kraft einer Torsionsfeder drehbaren Kern aufgewickelt sind, so daß sie entgegen der Rückstellkraft der Torsionsfeder vom Kern abgewickelt werden, wenn die Mitte des Klemmelements von der Halterung weg nach vorne gezogen wird. In beiden Fällen verläuft das Band vorzugsweise längsverschiebbar durch eine Führungsausnehmung auf der Rückseite oder im Inneren der Verblendungselemente, um eine Relativbewegung zwischen dem Band und den Verblendungselementen zu ermöglichen, wenn die Mitte des Klemmelements unter Dehnung oder unter Abwickeln des Bandes vom Kern nach vorne gezogen wird.

Die Dehnbarkeit des Klemmelements kann alternativ auch dadurch gewährleistet werden, daß das Klemmelement mehrere starre Abschnitte umfaßt, die jeweils durch dazwischen angeordnete Abschnitte aus einem elastisch dehnbaren Material miteinander verbunden sind.

Im folgenden wird die Erfindung anhand einiger in der Zeichnung dargestellter Ausführungsbeispiele näher erläutert. Es zeigen:
- Fig. 1:: eine perspektivische Ansicht einer erfindungsgemäßen Stauvorrichtung;
- Fig. 2:: eine Draufsicht von oben auf die Stauvorrichtung aus Fig. 1 mit unbelastetem Klemmelement;
- Fig. 3:: eine Draufsicht von oben auf die Stauvorrichtung aus Fig. 1 mit nach vorne gezogenem Klemmelement;
- Fig. 4:: eine vergrößerte Schnittansicht entlang der Linie IV-IV der Fig. 1;
- Fig. 5:: eine vergrößerte Schnittansicht entlang der Linie V-V der Fig. 4;
- Fig. 6:: eine vergrößerte Schnittansicht entlang der Linie VI-VI der Fig. 4;
- Fig. 7:: eine vergrößerte Schnittansicht entlang der Linie VII-VII der Fig. 4;
- Fig. 8:: eine perspektivische Ansicht einer weiteren erfindungsgemäßen Stauvorrichtung;
- Fig. 9:: eine perspektivische Ansicht eines Teil des Randes einer Griffmulde einer erfindungsgemäßen Stauvorrichtung;
- Fig. 10:: eine perspektivische Ansicht eines Endes eines Klemmelements;
- Fig. 11:: eine perspektivische Ansicht einer noch weiteren erfindungsgemäßen Stauvorrichtung;
- Fig. 12:: eine Draufsicht von oben auf die Stauvorrichtung aus Fig. 11 mit unbelastetem Klemmelement.

Die in der Zeichnung dargestellten Stauvorrichtungen 2 dienen dazu, von Reisenden in Kraftfahrzeugen, insbesondere in Personenkraftwagen und Bussen, Flugzeugen, Schiffen, Eisenbahnen oder anderen Personentransportmitteln mitgeführte kleinere Gegenstände des persönlichen Bedarfs, wie beispielsweise Getränkeflaschen oder -dosen, Regenschirme, Zeitschriften oder dergleichen in Reichweite der Reisenden zu verstauen, so daß sie sich nicht infolge von Trägheits- oder Zentrifugalkräften in unerwünschter Weise im Innenraum des Transportmittels bewegen können.

Die Stauvorrichtungen 2 bestehen aus einem vormontierten Einbauteil 4, das in eine zum Innenraum hin offene Aufnahmevertiefung (nicht dargestellt) in einem Teil des Transportmittels oder seiner Innenraumausstattung einsetzbar ist, beispielsweise bei Personenkraftwagen in eine Aufnahmevertiefung in der Mittelkonsole, auf der Unterseite der Instrumententafel, in der Türinnenverkleidung bzw. auf der Rückseite einer Rückenlehne oder seitlich an einem Unterteil oder einer Armlehne eines Sitzes.

Das Einbauteil 4 besteht im Wesentlichen aus einem vorzugsweise durch Spritzgießen aus Kunststoff hergestellten Formteil 6, das eine Halterung für ein langgestrecktes Klemmelement 8 bildet, dessen entgegengesetzte Enden im Abstand voneinander am Formteil 6 befestigt sind und dessen Mitte entgegen einer Rückstellkraft von der Vorderseite des Formteils 6 weg nach vorne gezogen werden kann, um einen zu verstauenden Gegenstand zwischen das Klemmelement 8 und die Vorderseite des Formteils 6 einzuführen und ihn dann durch Loslassen des Klemmelements 8 zwischen diesem und der Halterung festzuklemmen.

Das einstückig ausgebildete Formteil 6 besteht im wesentlichen aus einem erweiterten mittleren Griffmuldenteil 10 und zwei in Längsrichtung des Klemmelements 8 über den Griffmuldenteil 10 überstehenden gleichlangen Fortsätzen 12. Der Griffmuldenteil 10 und die beiden Fortsätze 12 weisen an ihrer Rückseite und an ihren Seiten eine dünne Begrenzungswand auf die im Bereich des Griffmuldenteils 10 konvex nach hinten ausbauchen kann und eine nach vorne offene Griffmulde 14 umschließt, während sie im Bereich der beiden Fortsätze 12 jeweils eine nach vorne offene flache rinnenförmige Aufnahme- und Haltemulde 16 für eines der Enden des Klemmelements 8 begrenzt.

Die Griffmulde 14 erstreckt sich über zwei entgegengesetzte Längsseitenränder 18 des Klemmelements 8 hinaus nach beiden Seiten und erleichtert das Ergreifen des unbelasteten Klemmelements 8 zum Festklemmen eines Gegenstandes, während in den Aufnahme- und Haltemulden 16 in der Nähe der äußeren Enden der Fortsätze 12 jeweils eine Befestigungseinrichtung 28 für das zugehörige Ende des Klemmelements 8 untergebracht ist.

An der Vorderseite des Formteils 6 ist dieses mit einem als Blendrahmen dienenden verbreiterten Rand 20 versehen, der nach außen überstehend um die Griffmulde 14 und die beiden in die Griffmulde 14 mündenden Aufnahme- und Haltemulden 16 umläuft.

Die in der Zeichnung nicht dargestellte Aufnahmevertiefung weist an ihrer Einmündung in den Innenraum eine Öffnung auf, deren Umriß an die äußere Kontur des Formteils 6 hinter dem Blendrahmen 20 angepaßt ist, so daß sich dieses von vorne her in die Vertiefung einführen läßt, bis zwei am Formteil 6 angeformte Rastzungen 22 jeweils mit einer Hinterschneidung in einer seitlichen Begrenzungswand der Aufnahmevertiefung in Eingriff treten und gleichzeitig der überstehende Rand 20 des Formteils mit seiner Rückseite gegen den Rand der Aufnahmevertiefung anschlägt, wobei er die Fuge zwischen dem Einbauteil 4 und dem Rand der Aufnahmevertiefung überdeckt.

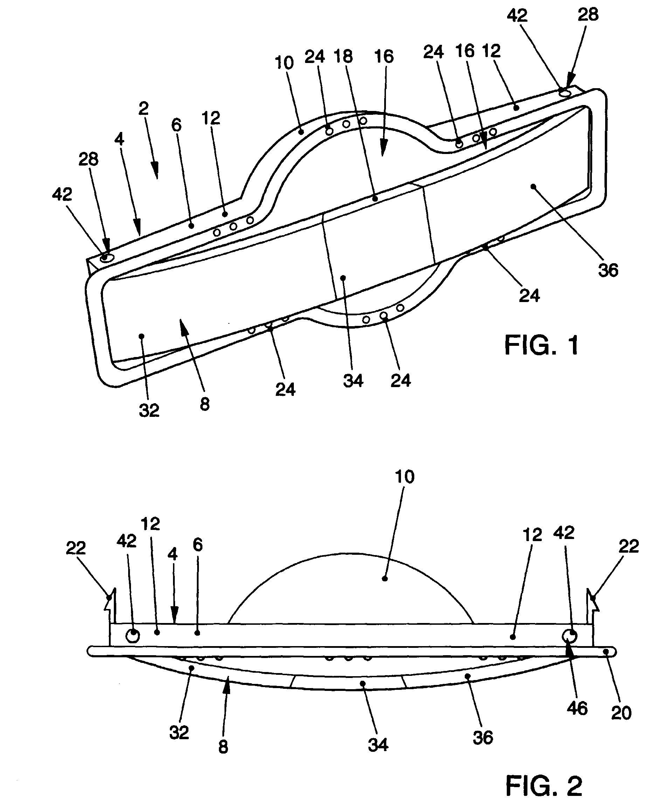

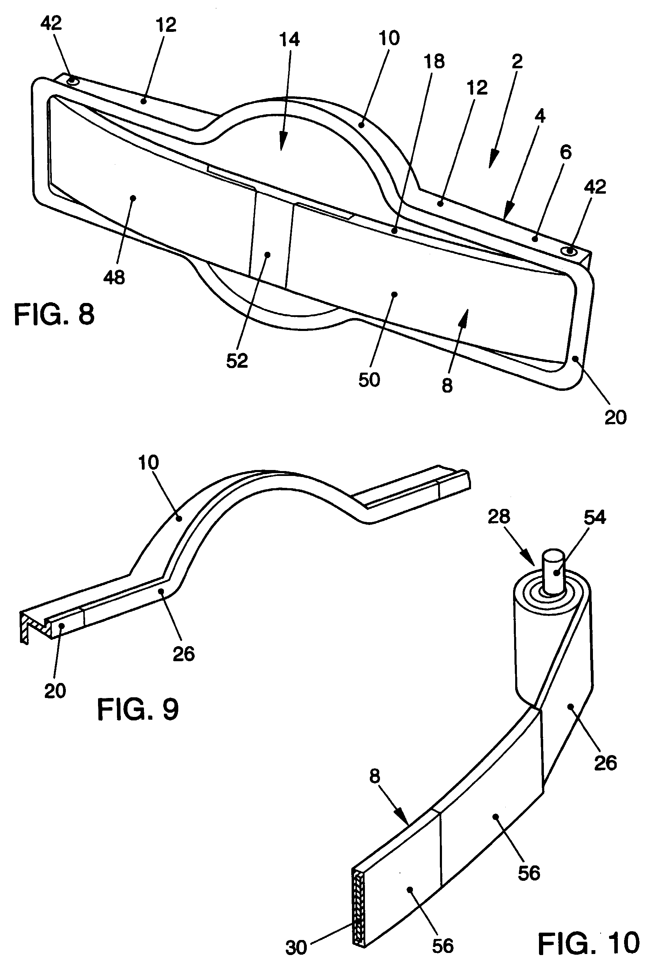

Die Vorderseite des verbreiterten Randes 20 bildet eine Anlagefläche für Gegenstände, die zwischen dem Klemmelement 8 und dem Formteil 6 festgeklemmt werden, und kann zu diesem Zweck mit überstehenden Gumminoppen 24 (Fig. 1) oder einem Gummieinsatzteil 26 (Fig. 9) versehen sein, um durch die rutschfeste Oberfläche und ggf. durch eine zusätzliche elastische Nachgiebigkeit des Gummimaterials ein Verrutschen des festgeklemmten Gegenstandes zu verhindern.

Bei der in den Figuren 1 bis 7 dargestellten Stauvorrichtung besteht das Klemmelement 8 im wesentlichen aus einem elastisch dehnbaren Band 30 und drei starren Verblendungselementen 32, 34, 36, die bei unbelastetem Klemmelement 8 die Vorderseite des Bandes 30 vollständig bedecken.

Das Band 30 besteht aus einem elastisch dehnbaren Gewebe, dessen in Längsrichtung des Bandes verlaufende Kettfäden von umsponnenen Gummifäden gebildet werden, die dem Band 30 eine ausreichende Dehnbarkeit und Reißfestigkeit verleihen und beim Dehnen des Bandes 30 die zum Festklemmen eines Gegenstandes zwischen dem Klemmelement 8 und der Vorderseite des Formteils 6 erforderliche Rückstellkraft liefern.

Das Band 30 weist entlang seines Mittelteils auf seiner der Griffmulde 14 und der Aufnahme- und Haltemulde 16 zugewandten Rückseite einen angeformten Streifen 38 aus Kautschuk oder elastomerem Polyurethan auf, um den Reibungskoeffizienten zwischen dem Band 30 und einem festgeklemmten Gegenstand zu vergrößern.

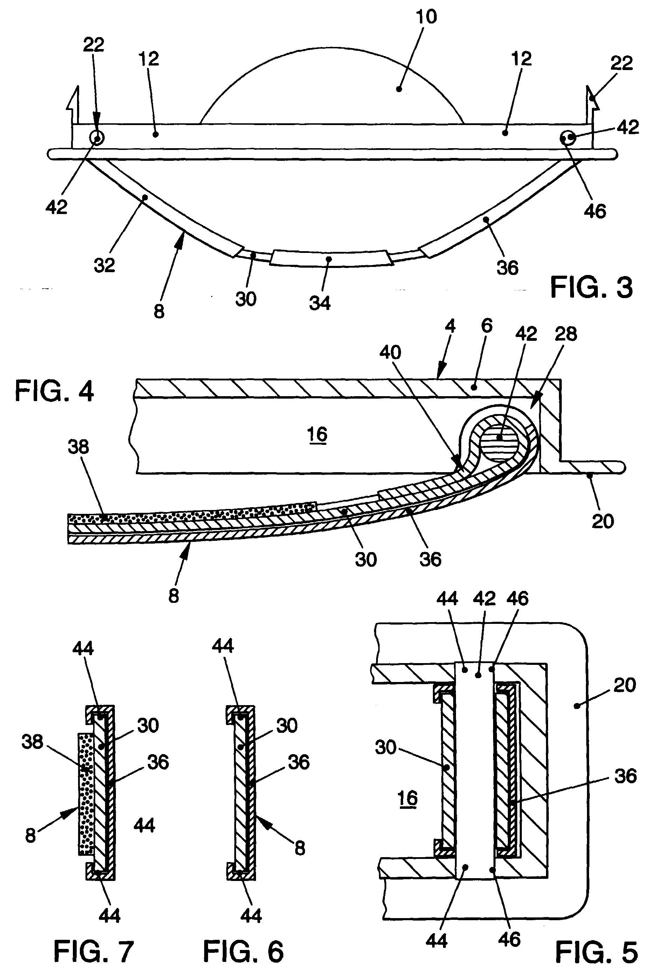

Wie am besten in Fig. 4 dargestellt, weist das Band 30 an seinen entgegengesetzten Enden jeweils eine zur Befestigung dienende Schlaufe 40 auf, die im Bereich des äußeren Endes des jeweiligen Fortsatzes 12 von einem Haltebolzen 42 der Befestigungseinrichtung 28 innerhalb der Aufnahme- und Haltemulde 16 festgehalten wird. Der zylindrische Haltebolzen 42 durchsetzt die Schlaufe 40 quer zur Längsrichtung des Bandes 30, wobei seine Stimenden 44 in Öffnungen 46 in entgegengesetzten Wandteilen des Fortsatzes 12 verstemmt oder in diese eingeschweißt sind.

Der Haltebolzen 42 dient gleichzeitig als Schwenklager für die beiden äußeren Verblendungselemente 32, 34, die zwischen den beiden Längsseitenrändern des Bandes 30 und der Wand des Fortsatzes 12 drehbar auf dem Haltebolzen 42 gelagert sind, so daß sie sich um den Bolzen 42 verschwenken lassen, wenn das Klemmelement 8 in seiner Mitte vom Formteil 6 weg nach vorne gezogen wird.

Die beiden entgegengesetzten Längsseitenränder des Bandes 30 sind jeweils in U-förmigen Führungsausnehmungen 44 (Fig. 7 und 8) auf der Rückseite der Verblendungselemente 32, 36 in deren Längsrichtung verschiebbar geführt, so daß sich das Band 30 bei seiner Dehnung in Bezug zum Verblendungselement 32, 36 verschieben kann. Der Streifen 38 steht zwischen den Führungsausnehmungen 44 nach hinten über die Verblendungselemente 32, 36 über.

Das mittlere Verblendungselement 34 kann entweder fest mit dem Band 30 verbunden oder ebenfalls in dessen Längsrichtung verschiebbar sein.

Im Unterschied dazu besteht das in Fig. 8 dargestellte Klemmelement 8 aus zwei starren äußeren Abschnitten 48, 50, deren äußere Enden in der Aufnahme- und Haltemulde 16 um Haltebolzen 42 schwenkbar gelagert sind, während ihre inneren Enden durch einen Abschnitt 52 aus einem gummielastisch dehnbaren Material verbunden sind, wobei dieser Abschnitt 52 bei seiner Dehnung die zum Festklemmen von Gegenständen erforderlich Rückstellkraft liefert. Der Abschnitt 52 aus gummielastische Material erstreckt sich auf der Rückseite des Klemmelements 8 etwas weiter in Richtung von dessen beiden Enden, um die Fläche mit hohem Reibungskoeffizienten zu vergrößern.

Bei dem in Fig. 10 teilweise dargestellten Klemmelement 8 besteht das Band 30 aus einem unelastisch biegsamen Material, wie beispielsweise einem Natur- oder Kunstfasergewebe, dessen entgegengesetzte Enden jeweils auf einer am äußeren Ende der Aufnahme- und Haltemulde 16 drehbar das Formteil 6 eingesetzten Federhülse 54 aufgewickelt sind, wobei in diesem Fall die Federhülse 54 die Rückstellkraft liefert.

Derjenige Teil des Bandes 30, der in unbelastetem Zustand an den auf der Federhülse 54 aufgewickelten Teil angrenzt, ist mit mehreren Verblendungselementen 56 (nur zwei dargestellt) versehen, die nebeneinander um das Band 30 herum an diesem angeformt sind (Fig. 10), wobei die einzelnen Elemente 56 dort, wo sie aneinanderstoßen, in Bezug zueinander verschwenkbar sind, um eine bessere Anpassung des Klemmelements 8 an die Kontur eines festgeklemmten Gegenstandes zu ermöglichen.

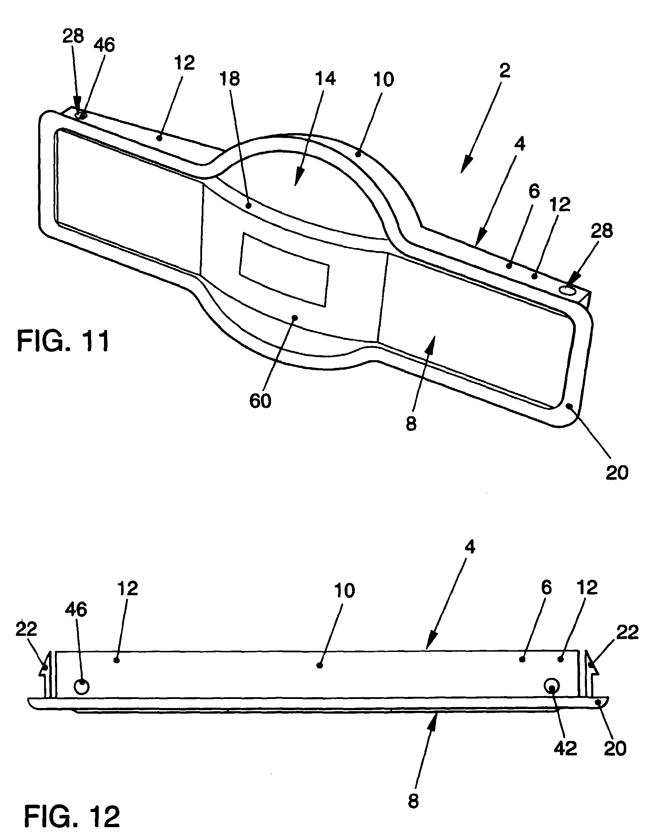

Bei dem in Fig. 11 und 12 dargestellten, besonders flach bauenden Einbauteil 4 mit einem ähnlichen Klemmelement 8 wie in den Figuren 1 bis 3, ist im Unterschied zu dem dort dargestellten Einbauteil 4 im Bereich der Griffmulde 14 keine nach hinten ausbauchende Begrenzungswand vorgesehen. Weiter sind die Rastzungen 22 statt an der Wand der Fortsätze 12 am umlaufenden Rand 20 angeformt, und das unbelastete Klemmelement 8 weist eine im wesentlichen mit der umgebenden Oberfläche fluchtende ebene Vorderseite auf, wobei es im Bereich seines mittleren Abschnitts 60 etwas schmaler ist, um das Ergreifen zu erleichtern.

## Patentansprüche

1. Vorrichtung zum Verstauen von mitgeführten Gegenständen in einem Innenraum eines Personenkraftwagens oder eines anderen Transportmittels, umfassend ein langgestrecktes Klemmelement, dessen entgegengesetzte Enden im Abstand voneinander an einer Halterung befestigt sind und dessen Mitte entgegen einer Rückstellkraft von der Halterung weg beweglich ist, um einen Gegenstand zwischen das Klemmelement und die Halterung einzuführen und ihn dann durch Loslassen des Klemmelements zwischen diesem und der Halterung festzuklemmen,
dadurch gekennzeichnet, daß
die Halterung (6) und das Klemmelement (8) ein vormontiertes Einbauteil (4) bilden, das in eine an die äußere Kontur der Halterung (6) angepaßte und zum Innenraum hin offene Aufnahmevertiefung eines Teils des Transportmittels oder seiner Innenraumausstattung einsetzbar ist.

2. Vorrichtung nach Anspruch 1,
dadurch gekennzeichnet, daß
die Halterung ein einstückiges Formteil (6) aus Kunststoff umfaßt, an dem die beiden Enden des Klemmelements (8) befestigt sind.

3. Vorrichtung nach Anspruch 2,
dadurch gekennzeichnet, daß
das Formteil (6) eine vom Klemmelement (8) überbrückte Griffmulde (14) begrenzt.

4. Vorrichtung nach Anspruch 3,
dadurch gekennzeichnet, daß
sich die Griffmulde (14) hinter der Mitte des Klemmelements (8) quer zu dessen Längsrichtung über mindestens einen Seitenrand (18) des Klemmelements (8) hinaus erstreckt.

5. Vorrichtung nach Anspruch 3 oder 4,
dadurch gekennzeichnet, daß
ein die Griffmulde (14) auf der Vorderseite des Einbauteils (4) umgebender Rand (20) mindestens teilweise mit einer rutschfesten Oberfläche (24, 26) versehen ist.

6. Vorrichtung nach einem der Ansprüche 3 bis 5,
dadurch gekennzeichnet, daß
ein die Griffmulde (14) auf der Vorderseite des Einbauteils (4) umgebender Rand (20) begrenzt elastisch nachgiebig ist.

7. Vorrichtung nach einem der Ansprüche 3 bis 6,
dadurch gekennzeichnet, daß
das Klemmelement (8) auf seiner der Griffmulde (14) zugewandten Rückseite eine rutschfeste Oberfläche (38) aufweist.

8. Vorrichtung nach einem der Ansprüche 3 bis 7,
dadurch gekennzeichnet, daß
eine von der Griffmulde (14) abgewandte Vorderseite des unbelasteten Klemmelements (8) im wesentlichen mit einer die Aufnahmevertiefung umgebenden Oberfläche fluchtet.

9. Vorrichtung nach einem der Ansprüche 3 bis 8,
dadurch gekennzeichnet, daß
das Formteil (6) zwei in Längsrichtung des Klemmelements (8) über entgegengesetzte Seiten der Griffmulde (14) überstehende Fortsätze (12) aufweist, die jeweils mit einer nach vorne offenen Aufnahme- und Haltemulde für die Enden des Klemmelements (8) und Befestigungseinrichtungen (28) zum Befestigen der Enden versehen sind.

10. Vorrichtung nach Anspruch 9,
dadurch gekennzeichnet, daß
die Befestigungseinrichtungen (28) einen Haltebolzen (42) umfassen, der eine Öffnung am Ende des Klemmelements (8) durchsetzt und mit seinen entgegengesetzte Stirnenden (44) in Aussparungen einer Begrenzungswand der Aufnahme- und Haltemulde (16) gehalten wird.

11. Vorrichtung nach einem der Ansprüche 1 bis 10,
dadurch gekennzeichnet, daß
das Einbauteil (4) in der Aufnahmevertiefung verrastbar ist.

12. Vorrichtung zum Verstauen von Gegenständen, insbesondere zum Verstauen von mitgeführten Gegenständen im Innenraum eines Kraftfahrzeugs, umfassend ein langgestrecktes Klemmelement, dessen entgegengesetzte Enden im Abstand voneinander an einer Halterung befestigt sind und dessen Mitte entgegen einer Rückstellkraft von der Halterung weg beweglich ist, um einen Gegenstand zwischen das Klemmelement und die Halterung einzuführen und ihn dann durch Loslassen des Klemmelements zwischen diesem und der Halterung festzuklemmen, insbesondere nach einem der vorangehenden Ansprüche,
dadurch gekennzeichnet, daß
das Klemmelement (8) auf einem Teil seiner Länge starr ausgebildet ist.

13. Vorrichtung nach einem der Ansprüche 1 bis 12,
dadurch gekennzeichnet, daß
das Klemmelement (8) ein flexibles Band (30) und mindestens ein starres Verblendungselement (32, 34, 36; 56) umfaßt.

14. Vorrichtung nach Anspruch 12,
dadurch gekennzeichnet, daß
das Band (309 aus einem elastisch dehnbaren Gewebe- und/oder Gummimaterial besteht.

15. Vorrichtung nach Anspruch 12,
dadurch gekennzeichnet, daß
das Klemmelement ein unelastisches Band (30) umfaßt, dessen entgegengesetzte Enden auf jeweils einem Kern (54) aufgewickelt sind und unter Drehung des Kerns (54) entgegen der Kraft einer Torsionsfeder vom Kern (54) abziehbar sind.

16. Vorrichtung nach einem der Ansprüche 13 bis 15,
dadurch gekennzeichnet, daß
die Verblendungselemente (32, 34, 36; 56) mindestens einen Teil der Vorderseite des Bandes (30) bedecken.

17. Vorrichtung nach Anspruch 16,
dadurch gekennzeichnet, daß
die Verblendungselemente (32, 34, 36) bei unbelastetem Klemmelement (8) die gesamte Vorderseite des Bandes (30) bedecken.

18. Vorrichtung nach einem der Ansprüche 13 bis 17,
dadurch gekennzeichnet, daß
das Klemmelement (8) zwei Verblendungselemente (32, 36) umfaßt, die im Bereich seiner Enden schwenkbar am Formteil (6) befestigt sind.

19. Vorrichtung nach einem der Ansprüche 13 bis 18,
dadurch gekennzeichnet, daß
das Band (30) längsverschiebbar durch mindestens eine Führungsausnehmung (44) auf der Rückseite oder im Inneren der Verblendungselemente (32, 36) verläuft.

20. Vorrichtung nach einem der Ansprüche 13 bis 19,
dadurch gekennzeichnet, daß
insgesamt drei Verblendungselemente (32, 34, 36) vorgesehen sind, von denen sich zwei (32, 36) von den Enden des Klemmelements (8) aus in Richtung von dessen Mitte erstrecken, wo das dritte, als Griffteil dienende Verblendungselement (34) angeordnet ist.

21. Vorrichtung nach einem der Ansprüche 13 bis 20,
dadurch gekennzeichnet, daß
das Klemmelement (8) mindestens ein Verblendungselement (34; 56) umfaßt, das in Längsrichtung des Bandes (30) unverschiebbar auf dem Band (30) befestigt ist.

22. Vorrichtung nach einem der Ansprüche 1 bis 21,
dadurch gekennzeichnet, daß
das Klemmelement (8) eine Mehrzahl von starren Abschnitten (50) umfaßt, die jeweils durch dazwischen angeordnete Abschnitte (52) aus einem elastisch dehnbaren Material miteinander verbunden sind.

23. Vorrichtung nach Anspruch 22,
dadurch gekennzeichnet, daß
das Klemmelement (8) zwei starre, an einem Ende schwenkbar an der Halterung befestigte Abschnitte umfaßt, die durch einen mittleren Abschnitt (52) verbunden sind, der mindestens teilweise aus einem elastisch dehnbaren Material besteht.

24. Sitz oder Sitzbank, insbesondere für ein Kraftfahrzeug,
dadurch gekennzeichnet, daß
die Aufnahmevertiefung in seinem Sitzteil oder seiner Rückenlehne angeordnet ist.

25. Kraftfahrzeug, gekennzeichnet durch mindestens einen Sitz oder eine Sitzbank nach Anspruch 24.

26. Kraftfahrzeug, gekennzeichnet durch eine zum Innenraum hin offene Aufnahmevertiefung, in die eine Vorrichtung nach einem der vorangehenden Ansprüche eingesetzt ist.

27. Kraftfahrzeug nach Anspruch 24,
dadurch gekennzeichnet, daß
die Aufnahmevertiefung in seiner Mittelkonsole angeordnet ist.

28. Kraftfahrzeug nach Anspruch 24,
dadurch gekennzeichnet, daß
die Aufnahmevertiefung auf der Unterseite einer Instrumententafel angeordnet ist.

29. Kraftfahrzeug nach Anspruch 24,
dadurch gekennzeichnet, daß
die Aufnahmevertiefung in einer Türinnenverkleidung angeordnet ist.
